# EUROPÄISCHE PATENTSCHRIFT

(11) **EP 3 049 292 B1**
(45) Veröffentlichungstag und Bekanntmachung des Hinweises auf die Patenterteilung: **20.12.2017**
(21) Anmeldenummer: 14739686.5
(22) Anmeldetag: 11.07.2014
(51) Int. Cl.: B60T 7/12, B60T 8/36

(54) **BREMSVORRICHTUNG SOWIE VERWENDUNG EINES WEGEVENTILS IN EINER BREMSVORRICHTUNG**
BRAKE DEVICE AND USE OF A DIRECTION CONTROL VALVE IN A BRAKE DEVICE
DISPOSITIF DE FREINAGE ET UTILISATION D'UN DISTRIBUTEUR DANS UN DISPOSITIF DE FREINAGE

(30) Priorität: 25.09.2013 DE 102013015971
(43) Veröffentlichungstag der Anmeldung: 03.08.2016
(73) Patentinhaber: WABCO GmbH, 30453 Hannover (DE)
(72) Erfinder: ROTERS, Gerd, 31515 Wunstorf (DE)
(74) Vertreter: Lauerwald, Jörg
(86) Internationale Anmeldenummer: PCT/EP2014/001914
(87) Internationale Veröffentlichungsnummer: WO 2015/043690

(56) Entgegenhaltungen:
- WO-A1-2012/113770
- DE-A1- 3 439 067
- DE-A1- 4 203 541

## Beschreibung

Die Erfindung betrifft eine Bremsvorrichtung sowie eine Verwendung eines Wegeventils in einer Bremsvorrichtung.

Es sind verschiedene Anwendungsmöglichkeiten für Bremsvorrichtungen bekannt, bei denen eine Haltefunktion der Bremsvorrichtung gewünscht wird, also der einmal vom Fahrer mit dem Bremspedal angeforderte Bremsdruck an den Bremsaktuatoren gehalten werden soll.

Z.B. muss bei einem Fahrzeug mit Automatikgetriebe das Fahrzeug im Stillstand vom Fahrer mit dem Bremspedal gehalten werden, solange eine Fahrstufe eingelegt ist, da das Fahrzeug ansonsten zur langsamen Vorwärtsbewegung neigt.

Ferner ist bei einem Fahrzeug mit einem Schaltgetriebe ein aufwendig vom Fahrer zu initiierendes Zusammenspiel zwischen Handbremse, Kupplung und Gaspedal notwendig, um an einer Steigung anzufahren.

Insbesondere bei Transportfahrzeugen, wie z.B. Müllfahrzeugen, oder Linienbussen ist zudem eine häufiges Anhalten des Fahrzeugs für eine zeitlich begrenzte kurze Dauer gewünscht, bei dem im Falle der Transportfahrzeuge das Fahrzeug beladen wird oder im Falle der Linienbusse Passagiere ein- und aussteigen. Während der Haltezeit muss der Fahrzeugführer das Bremspedal mit der gewünschten Bremskraft andauert halten oder ggf. sogar die Bremskraft erhöhen, wenn das an einer Steigung stehende Fahrzeug aufgrund von Gewichtserhöhung, z.B. durch Beladung, in Rückwärtsrichtung beginnt zu rollen.

Gemäß dem Stand der Technik sind daher Haltesysteme bekannt, die einen vom Fahrer durch Betätigen des Bremspedals angeforderten Bremsdruck aufrechterhalten und dafür die Drucksteuerventile eines vorhandenen Anti-Blockier-Systems (ABS) nutzen. Soll der Bremsdruck an den Bremsaktuatoren gehalten werden, so werden die Drucksteuerventile des ABS geschlossen, sodass der an den Bremsaktuatoren anliegende Druck auch beim Lösen des Bremspedals weiterhin anliegt.

Eine Bremsvorrichtung mit den Merkmalen des Oberbegriffs des Patentanspruchs 1 bzw. 10 ist aus der DE 42 03 541 A1 bekannt.

Derartige Systeme sind jedoch nur dafür geeignet eine zeitlich begrenzte Haltefunktion bzw. Druckhaltefunktion zu gewährleisten, da die Ventile auch im geschlossenen Zustand einen geringen Fluidstrom ermöglichen und somit der zu haltende Druck schnell wieder abnimmt. Ferner sind die Ventile nicht geeignet, um den an den Bremsaktuatoren anliegenden Druck zu erhöhen. Hierfür sind weitere Modifikationen, insbesondere durch Hinzufügen zusätzlicher Druckleitungen und mehrerer Ventile, an der Bremsvorrichtung bzw. Bremsanlage notwendig.

Der Erfindung liegt daher die Aufgabe zugrunde eine Bremsvorrichtung mit einer kostengünstigen und zuverlässigen Druckhaltefunktion zu finden, die die Probleme der bekannten Lösungen überwindet.

Die Erfindung löst diese Aufgabe durch eine Bremsvorrichtung für ein Fahrzeug nach Anspruch 1 sowie eine Verwendung eines zusätzlichen Wegeventils in einer Bremsvorrichtung gemäß Anspruch 10.

Die Erfindung umfasst dazu eine Bremsvorrichtung, insbesondere eine Bremsanlage, für ein Fahrzeug, insbesondere einen Lastkraftwagen. Die Bremsvorrichtung weist ein Betriebsbremsventil auf, wobei das Betriebsbremsventil auf eine Betätigung eines Bedienmittels hin an wenigstens einem Betriebsbremsventilausgang einen Druck erzeugt, der betätigungsabhängig ist. Beispielsweise wird mit dem Bedienmittel der Druck erhöht, solange das Bedienmittel tiefer gedrückt, also betätigt, wird. Mit dem Bedienmittel wird hingegen der Druck wieder gesenkt, solange das Bedienmittel wieder gelöst wird. Bei konstant gehaltenem Bedienmittel bleibt auch der Druck weitestgehend konstant.

Ferner weist die Bremsvorrichtung mindestens einen Bremsaktuator mit einem Bremsaktuatoreingang auf. Der Bremsaktuator ist über seinen Bremsaktuatoreingang mit dem Betriebsbremsventilausgang des Betriebsbremsventils mit einer Druckleitung bzw. Druckverbindung verbunden. Die Druckverbindung weist mindestens ein Wegeventil und ein Rückschlagventil auf. Hierbei ist es nicht ausgeschlossen, dass gemäß verschiedener Ausführungsformen auch zusätzliche Bremsassistenzsysteme und/oder druckregulierende Elemente Bestanteile der Bremsvorrichtung sind, durch die die Verbindung mit der Druckleitung unterbrochen werden kann.

Die Druckverbindung mit dem Wegeventil und dem Rückschlagventil ist derart ausgebildet, um das Rückschlagventil bei einer ersten Ventilstellung des Wegeventils zu überbrücken. Ist das Wegeventil überbrückt, so ist ein Fluidstrom vom Bremsaktuatoreingang zum Betriebsbremsventilausgang gewährleistet. In einer zweiten Ventilstellung des Wegeventils führt die Druckverbindung durch das Rückschlagventil und ein Fluidstrom vom Bremsaktuatoreingang zum Betriebsbremsventilausgang wird durch das Rückschlagventil weitestgehend verhindert bzw. gesperrt.

Dank der Erfindung wird eine kostengünstige Druckhaltefunktion gewährleistet da nur eine einziges Wegeventil und ein Rückschlagventil zusätzlich in eine bestehende Bremsvorrichtung bzw. Bremsanlage eingebracht werden müssen. Ferner ist dank der Erfindung eine zuverlässige Druckhaltefunktion gewährleistet, die auch über einen längeren Zeitraum einen aufgebauten Druck halten kann, da das Rückschlagventil in Sperrrichtung wesentlich besser sperrt als üblicherweise zum Druck halten genutzte ABS-Ventile.

Gemäß einer ersten Ausführungsform ist die Bremsvorrichtung mit dem Wegeventil und dem Rückschlagventil derart ausgebildet, das Wegeventil und das Rückschlagventil also in die Druckverbindung integriert, sodass ein Fluidstrom vom Betriebsbremsventilausgang zum Bremsaktuatoreingang unabhängig von der Ventilstellung des Wegeventils durch das Wegeventil und das Rückschlagventil gewährleistet wird. Das Rückschlagventil ist bei der zweiten Ventilstellung in dieser Flussrichtung also in Durchlassrichtung in die Druckverbindung integriert.

Hierdurch wird in jedem Fall, also bei aktivierter Druckhaltefunktion und im Normalbetrieb, gewährleistet, dass der Fahrer bzw. Fahrzeugführer im Falle einer gewünschten höheren Bremskraft, diese Bremskraft durch Betätigung des Bedienmittels erhöhen kann, ohne dass eine Ventilschaltung erfolgen muss.

Gemäß einer weiteren Ausführungsform weist das Wegeventil mindestens einen Wegeventileingang und mindestens zwei Wegeventilausgänge und das Rückschlagventil einen Rückschlagventileingang und einem Rückschlagventilausgang auf. Ein erster der Wegeventilausgänge ist mit dem Rückschlagventilausgang und ein zweiter der Wegeventilausgänge ist mit dem Rückschlagventileingang unmittelbar oder mittelbar verbunden. Mittelbar bedeutet hier eine direkte Verbindung und unmittelbar bedeutet, dass zwar eine direkte Verbindung besteht, wobei andere Komponenten in die Verbindung integriert sein können.

Durch diese Ausführungsform wird es ermöglicht, dass eine vorhandene Bremsanlage bzw. Bremsvorrichtung lediglich derart modifiziert werden muss, um die Druckhaltefunktion zu gewährleisten, dass die Hauptdruckleitung an einer Stelle unterbrochen wird und in dieser Unterbrechung das Wegeventil mit seinem Wegeventileingang und mit seinem ersten Wegeventilausgang angeschlossen werden.

Gemäß einer weiteren Ausführungsform entspricht die erste Ventilstellung des Wegeventils einer Ruhestellung, die das Wegeventil im unbestromten und/oder nicht angesteuerten Zustand einnimmt. Die Bremsvorrichtung ist ferner derart ausgebildet, um das Wegeventil bei nicht Betätigung bzw. Loslassen des Bedienmittels und/oder Betätigung eines Schaltmittels und/oder Signalisieren eines Anfahrtwunsches von einer Haltestellung in die Ruhestellung umzuschalten.

Dank dieser Ausführungsform wird es ermöglicht, die Ventilstellung des Wegeventils gezielt in die Ruhestellung zu überführen, wenn keine Haltefunktion gewünscht ist. Ferner wird die Ruhestellung auch "automatisch" im unbestromten Fall eingenommen, dass heißt, falls die Spannungsversorgung des Fahrzeugs zum Wegeventil unterbrochen oder defekt ist, die normale Bremsfunktion des Fahrzeugs gewährleistet ist.

Gemäß einer weiteren Ausführungsform entspricht die zweite Ventilstellung des Wegeventils der Haltestellung, die das Wegeventil im bestromten und/oder angesteuerten Zustand einnimmt. Die Bremsvorrichtung ist ferner derart ausgebildet, um das Wegeventil im Stillstand des Fahrzeugs bei Betätigung des Bedienmittels und/oder eines Schaltmittels von der Ruhestellung in die Haltestellung umzuschalten.

Dank dieser Ausführungsform wird gewährleistet, dass die Haltefunktion bzw. die Druckhaltefunktion nur im Stillstand des Fahrzeugs, der z.B. von einer Elektronischen Steuereinheit (ECU) mit daran angeschlossenen Sensoren detektiert wird, aktiviert werden kann. Die Haltefunktion kann demnach nicht während der normalen Fahrt aktiviert werden, da dies in einem derartigen Fall zu einem ungewollten Stillstand des Fahrzeugs führen könnte, wenn die Haltefunktion versehentlich aktiviert würde.

Gemäß einer weiteren Ausführungsform ist das Bedienmittel ein Bremspedal. Hierdurch ist ein Aktivieren der Halte- bzw. Druckhaltefunktion mit einer in jedem Fahrzeug schon vorhandenen Komponente, nämlich dem Bremspedal, möglich, ohne dass weitere Komponenten, wie Schalter oder Hebel, dem Fahrzeug hinzugefügt werden müssen.

Gemäß einer weiteren Ausführungsform ist der Betriebsbremsventilausgang über die Druckverbindung bzw. die Druckleitung mittelbar oder unmittelbar mit dem Wegeventileingang verbunden. Durch eine derartige Verbindung wird ermöglicht, dass der am Betriebsbremsventilausgang erzeugte Druck immer auch am Wegeventileingang anliegt.

Gemäß einer weiteren Ausführungsform sind der erste Wegeventilausgang und der Rückschlagventilausgang mittelbar oder unmittelbar mit dem Bremsaktuatoreingang oder den Bremsaktuatoreingängen verbindbar. Somit steht der vom Wegeventil und dem Rückschlagventil ausgangsseitig zur Verfügung gestellte Druck auch an dem oder allen Bremsaktuatoren zur Verfügung.

Gemäß einer weiteren Ausführungsform weist die Bremsvorrichtung einen Drucksensor auf, der in der Druckverbindung zwischen dem Betriebsbremsventilausgang und dem Wegeventileingang angeordnet ist. Mit diesem Drucksensor ist z.B. festzustellen, ob bei aktivierter Halte- bzw. Druckfunktion das Bedienmittel, wie z.B. das Bremspedal, losgelassen wird. In diesem Fall erfolgt dann z.B. "automatisch" also ohne weiteres Handeln des Fahrers ein Abschalten der Halte- bzw. Druckfunktion. Das Wegeventil wird also wieder in seine Ruhestellung bzw. erste Ventilstellung überführt.

Ferner umfasst die Erfindung die Verwendung eines Wegeventils und eines Rückschlagventils in einer Bremsvorrichtung für ein Fahrzeug. Die Bremsvorrichtung weist ein Betriebsbremsventil auf, das derart ausgebildet ist, um auf eine Betätigung eines Bedienmittels hin an wenigstens einem Betriebsbremsventilausgang einen betätigungsabhängigen Druck zu erzeugen. Außerdem weist die Bremsvorrichtung mindestens einen Bremsaktuator mit einem Bremsaktuatoreingang auf. Die Bremsvorrichtung weist also einen oder mehrere Bremsaktuatoren auf, der bzw. die jeweils einen Bremsaktuatoreingang aufweisen.

Der Betriebsbremsventilausgang ist mit dem Bremsaktuatoreingang mittels einer Druckverbindung verbindbar, wobei die Druckverbindung mindestens das Wegeventil und das Rückschlagventil aufweist. Das Wegeventil und das Rückschlagventil sind derart in der Druckverbindung verwendet, sodass die Druckverbindung derart ausgebildet ist, um das Rückschlagventil bei einer ersten Ventilstellung des Wegeventils zu überbrücken. Ein Fluidstrom vom Bremsaktuatoreingang zum Betriebsbremsventilausgang ist somit gewährleistbar. Ferner ist die Druckverbindung derart ausgebildet, sodass bei einer zweiten Ventilstellung des Wegeventils ein Fluidstrom durch das Rückschlagventil vom Bremsaktuatoreingang zum Betriebsbremsventilausgang weitestgehend verhindert wird. Hierzu ist das Wegeventil umgekehrt in sonst üblicher Weise in die Druckverbindung bzw. Druckleitung integriert.
Durch die Verwendung des Wegeventils und des Rückschlagventils in einer Bremsanlage bzw. Bremsvorrichtung wird insbesondere eine kostengünstige Druckhaltefunktion gewährleistet da nur ein einziges Wegeventil und ein Rückschlagventil zusätzlich in eine bestehende Bremsvorrichtung bzw. Bremsanlage eingebracht werden müssen.

Weitere Ausführungsformen der Erfindung ergeben sich aus den Unteransprüchen sowie aus den anhand der Zeichnungen näher erläuterten Ausführungsbeispielen. In den Zeichnungen zeigen:
- Fig. 1: ein Ausführungsbeispiel einer Bremsvorrichtung im normalen Bremsbetrieb und
- Fig. 2: ein Ausführungsbeispiel einer Bremsvorrichtung mit aktivierter Halte- bzw. Druckhaltefunktion.

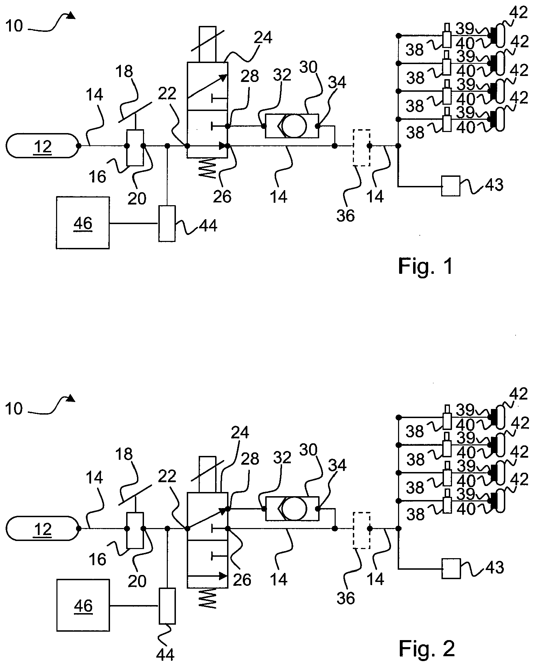

Fig. 1 zeigt ein Ausführungsbeispiel einer Bremsvorrichtung 10. Die Bremsvorrichtung 10 weist ein Druckreservoir 12 auf. Das Druckreservoir 12 entspricht einem Behältnis, in dem z.B. Luft oder Bremsflüssigkeit mit einem vordefinierten Druck zur Verfügung gestellt wird. Im Falle eines Luftdruckreservoirs 12 wird dieses z.B. von einem nicht dargestellten Kompressor gespeist. Das Druckreservoir 12 ist über eine Druckverbindung bzw. Druckleitung 14 mit einem Betriebsbremsventil 16 verbunden. Das Betriebsbremsventil 16 ist derart ausgebildet, dass durch Betätigung eines Bedienmittels 18, das hier als Bremspedal dargestellt ist, ein betätigungsabhängiger Druck an einem Betriebsbremsventilausgang 20 zur Verfügung gestellt wird. Das bedeutet, dass der vom Druckreservoir 12 zur Verfügung gestellte Druck nach dem Grad der Öffnung des Betriebsbremsventils 16 am Betriebsbremsventilausgang 20 zur Verfügung gestellt wird, wobei dieser Grad durch das Bedienmittel 18 eingestellt wird.

Der Betriebsbremsventilausgang 20 ist über die Druckleitung 14 weiter mit einem Wegeventileingang 22 eines Wegeventils 24 verbunden. Das Wegeventil 24 ist in diesem Ausführungsbeispiel ein 3/2-Wegeventil, das in Ruhestellung geöffnet ist. Das 3/2-Wegeventil ist jedoch in umgekehrter Richtung in die Druckleitung 14 integriert, sodass es vorliegend einen ersten Wegeventilausgang 26 und einen zweiten Wegeventilausgang 28 aufweist. Zudem weist die Bremsvorrichtung 10 ein Rückschlagventil 30 auf, das einen Rückschlagventileingang 32 und einen Rückschlagventilausgang 34 aufweist.

Der Rückschlagventilausgang 34 ist mit dem ersten Wegeventilausgang 26 verbunden. Das Rückschlagventil ist derart ausgebildet, dass es den Fluss eines Fluids vom Rückschlagventileingang 32 zum Rückschlagventilausgang 34 erlaubt, sodass diese Richtung einer Durchlassrichtung entspricht. Der Fluss eines Fluids vom Rückschlagventilausgang 34 zum Rückschlagventileingang 32 wird jedoch vom Rückschlagventil 30 verhindert, wobei diese Flussrichtung damit der Sperrrichtung des Rückschlagventils 30 entspricht.

Der erste Wegeventilausgang 26 bzw. der Rückschlagventilausgang 34, also die Verbindung des ersten Wegeventilausgangs 26 und des Rückschlagventilausgangs 34 sind weiter mit der Druckverbindung bzw. Druckleitung 14 über weitere Komponenten 36 der Bremsvorrichtung und Anti-Blockier-System-Ventile 38 mit Bremsaktuatoreingängen 39 von Bremsaktuatoren 40 verbunden. Die Bremsaktuatoren 40 sind im Bereich der Fahrzeugräder 42 angeordnet, um diese über weitere nicht dargestellt Bestandteile einer üblichen Bremsanlage abbremsen zu können.

Ferner sind der erste Wegeventilausgang 26 bzw. der Rückschlagventilausgang 34, also die Verbindung des ersten Wegeventilausgangs 26 und des Rückschlagventilausgangs 34, zusätzlich weiter mit der Druckverbindung bzw. Druckleitung 14 über weitere Komponenten 36 mit einem Druckanschluss 43 verbunden. An diesen Druckanschluss 43 ist eine Bremsanlage bzw. ein Bremskreis eines Fahrzeuganhängers anschließbar.

Durch den Druckanschluss 43 ergibt sich die Besonderheit, dass das Wegeventil 24 und das Rückschlagventil 30 auf zwei Bremskreise, nämlich z.B. auf den Bremskreis einer Hinterachse des Zugfahrzeugs und auf den Bremskreis des Fahrzeuganhängers, wirken können. Hierdurch ergibt sich der Vorteil, dass mit einem einzigen Wegeventil 24 und einem einzigen Rückschlagventil 30 ein Zugfahrzeug und ein Anhänger bzw. Fahrzeuganhänger gleichermaßen gebremst bzw. eingebremst werden können und somit die Haltefunktion bzw. Druckhaltefunktion also auch ohne zusätzliche Modifikationen am Bremskreis des Fahrzeuganhängers für den Fahrzeuganhänger nutzbar ist.

Ferner weist die Bremsvorrichtung einen Drucksensor 44 auf, der den vom Betriebsbremsventil 16 an seinem Betriebsbremsventilausgang 20 zur Verfügung gestellten Druck misst. Der Drucksensor 44 ist mit einer Elektronischen Steuereinheit (ECU) 46 elektrisch verbunden, um der ECU 46 den zur Verfügung gestellten Druck zu übermittelt. Die ECU 46 ist ferner mit dem Wegeventil 24 und den Anti-Blockier-System-Ventilen 38 verbunden, wobei diese Verbindung hier zur besseren Übersichtlichkeit nicht dargestellt ist. Die ECU 34 steuert die Ventilstellung des Wegeventils 24. Ferner ist die ECU 46 mit weiteren Sensoren verbunden, mit denen z.B. ein Stillstand des Fahrzeugs, detektierbar ist.

In der dargestellten ersten Ventilstellung des Wegeventils 24, die einer Ruhestellung entspricht, ist eine Haltefunktion bzw. Druckhaltefunktion deaktiviert. Die Fahrzeugräder 42 befinden sich also in Bewegung, wobei diese Bewegung von der ECU 46 detektiert wird und das Wegeventil 24 daher nicht angesteuert wird. Ein Fluid kann also vom Betriebsbremsventilausgang 20 zu den Bremsaktuatoren 40 und zum Druckanschluss 43 oder in umgekehrter Richtung fließen. Ein normales Bremsen während der Fahrt des Fahrzeugs ist also gewährleistet.

Fig. 2 zeigt den Fall, dass das Wegeventil 24 in seine zweite Ventilstellung umgeschaltet bzw. überführt ist. Gleich Bezugzeichen in Fig. 2 wie in Fig. 1 entsprechen gleichen Merkmalen. Diese Ventilstellung entspricht einer Halte- bzw. Druckhaltestellung, bei der also die Halte- bzw. Druckhaltefunktion aktiviert ist.

Die zweite Ventilstellung des Wegeventils 24 wurde durch Ansteuern des Wegeventils 24 mit der ECU 46 erreicht. In dieser Stellung wurde ein Betätigen des Bedienmittels 18 von der ECU 46 mittels des Drucksensors 44 gemessen und der Stillstand der Fahrzeugräder 42 von der ECU 46 sensiert, sodass die ECU 46 das Wegeventil 24 angesteuert hat.

In dieser zweiten Wegeventilstellung kann ein Fluid vom Betriebsbremsventilausgang 20 zu den Bremsaktuatoren 40 und zum Druckanschluss 43 fließen, wobei der Fluss in umgekehrter Richtung durch das Rückschlagventil gesperrt wird. Somit ist ein Halten oder Erhöhen des Bremsdrucks an den Bremsaktuatoren 40 möglich, wobei ein Absenken des Bremsdrucks erst wieder erfolgt, wenn das Wegeventil 24 in seine erste Ventilstellung zurück schaltet. Dies erfolgt z.B. wenn das Bedienmittel 18 komplett gelöst, also nicht mehr vom Fahrer bedient wird, da die ECU 46 mittels des Drucksensors 44 dieses Lösen detektiert.

Ferner ist gemäß einem weiteren Ausführungsbeispiel, das hier nicht dargestellt ist, ein Schalter vorgesehen, der mit der ECU 46 verbunden ist. Eine aktivierte Haltefunktion wird erst durch Betätigen des Schalters deaktiviert, wobei dazu die ECU 46 das Wegeventil 24 also erst durch Betätigen des Schalters wieder in die erste Ventilstellung umschaltet. Gemäß einem weiteren Ausführungsbeispiel, das ebenfalls hier nicht dargestellt ist, ist ein Sensor an die ECU 46 angeschlossen, der einen Anfahrtwunsch, z.B. durch Betätigen eines Gaspedals sensieren kann, und die ECU 46 das Wegeventil 24 erst wieder in die erste Ventilstellung umschaltet, wenn ein Anfahrtwunsch von dem Sensor an die ECU signalisiert wird.

### Bezugszeichenliste (Bestandteil der Beschreibung)

- 10: Bremsvorrichtung
- 12: Druckreservoir
- 14: Druckleitung
- 16: Betriebsbremsventil
- 18: Bedienmittel
- 20: Betriebsbremsventilausgang
- 22: Wegeventileingang
- 24: Wegeventil
- 26: erster Wegeventilausgang
- 28: zweiter Wegeventilausgang
- 30: Rückschlagventil
- 32: Rückschlagventileingang
- 34: Rückschlagventilausgang
- 36: weitere Komponenten
- 38: ABS-Ventile
- 39: Bremsaktuatoreingang
- 40: Bremsaktuatoren
- 42: Fahrzeugräder
- 43: Druckanschluss
- 44: Drucksensor
- 46: ECU

## Patentansprüche

1. Bremsvorrichtung (10) für ein Fahrzeug, wobei die Bremsvorrichtung (10) ein Betriebsbremsventil (16) aufweist, das derart ausgebildet ist, um auf eine Betätigung eines Bedienmittels (18) hin an wenigstens einem Betriebsbremsventilausgang (20) einen betätigungsabhängigen Druck zu erzeugen, und die Bremsvorrichtung (10) mindestens einen Bremsaktuator (40) mit einem Bremsaktuatoreingang (39) aufweist, wobei der Betriebsbremsventilausgang (20) mit dem Bremsaktuatoreingang (39) mittels einer Druckverbindung (14) verbindbar ist und die Druckverbindung (14) mindestens ein Wegeventil (24) und ein Rückschlagventil (30) aufweist, **dadurch gekennzeichnet, dass** die Druckverbindung (14) mit dem Wegeventil (24) und dem Rückschlagventil (30) derart ausgebildet ist, um das Rückschlagventil (30) bei einer ersten Ventilstellung des Wegeventils (24) zu überbrücken, sodass ein Fluidstrom vom Bremsaktuatoreingang (39) zum Betriebsbremsventilausgang (20) gewährleistbar ist und um bei einer zweiten Ventilstellung des Wegeventils (24) einen Fluidstrom durch das Rückschlagventil (30) vom Bremsaktuatoreingang (39) zum Betriebsbremsventilausgang (20) weitestgehend zu verhindern.

2. Bremsvorrichtung nach Anspruch 1,
**dadurch gekennzeichnet,**
**dass** das Wegeventil (24) und das Rückschlagventil (30) derart ausgebildet sind, um einen Fluidstrom vom Betriebsbremsventilausgang (20) zum Bremsaktuatoreingang (39) unabhängig von der Ventilstellung des Wegeventils (24) zu gewährleisten.

3. Bremsvorrichtung nach Anspruch 1 oder 2,
**dadurch gekennzeichnet,**
**dass** das Wegeventil (24) mindestens einen Wegeventileingang (22) und mindestens zwei Wegeventilausgänge (26, 28) und das Rückschlagventil (30) einen Rückschlagventileingang (32) und einem Rückschlagventilausgang (34) aufweist, wobei ein erster der Wegeventilausgänge (26) mit dem Rückschlagventilausgang (34) und ein zweiter der Wegeventilausgänge (28) mit dem Rückschlagventileingang (32) unmittelbar oder mittelbar verbunden ist.

4. Bremsvorrichtung nach einem der vorhergehenden Ansprüche
**dadurch gekennzeichnet,**
**dass** die erste Ventilstellung des Wegeventils (24) einer Ruhestellung entspricht, die das Wegeventil (24) im unbestromten und/oder nicht angesteuerten Zustand einnimmt, wobei die Bremsvorrichtung (10) derart ausgebildet ist, um das Wegeventil (24) bei nicht Betätigung bzw. Loslassen des Bedienmittels (18) und/oder Betätigung eines Schaltmittels und/oder Signalisieren eines Anfahrtwunsches von einer Haltestellung in die Ruhestellung umzuschalten.

5. Bremsvorrichtung nach einem der vorhergehenden Ansprüche
**dadurch gekennzeichnet,**
**dass** die zweite Ventilstellung des Wegeventils (24) der Haltestellung entspricht, die das Wegeventil (24) im bestromten und/oder angesteuerten Zustand einnimmt, und die Bremsvorrichtung (10) derart ausgebildet ist, um das Wegeventil (24) im Stillstand des Fahrzeugs bei Betätigung des Bedienmittels (18) und/oder eines Schaltmittels von der Ruhestellung in die Haltestellung umzuschalten.

6. Bremsvorrichtung nach einem der vorhergehenden Ansprüche
**dadurch gekennzeichnet,**
**dass** das Bedienmittel (18) ein Bremspedal ist.

7. Bremsvorrichtung nach einem der vorhergehenden Ansprüche
**dadurch gekennzeichnet,**
**dass** der Betriebsbremsventilausgang (20) über die Druckverbindung (14) mittelbar oder unmittelbar mit dem Wegeventileingang (22) verbunden bzw. verbindbar ist.

8. Bremsvorrichtung nach einem der vorhergehenden Ansprüche
**dadurch gekennzeichnet,**
**dass** der erste Wegeventilausgang (26) und der Rückschlagventilausgang (34) mittelbar oder unmittelbar mit dem Bremsaktuatoreingang (39) oder den Bremsaktuatoreingängen (40) verbunden bzw. verbindbar sind.

9. Bremsvorrichtung nach einem der vorhergehenden Ansprüche
**dadurch gekennzeichnet,**
**dass** die Bremsvorrichtung (10) einen Drucksensor (44) aufweist, der in der Druckverbindung (14) zwischen dem Betriebsbremsventilausgang (20) und dem Wegeventileingang (22) angeordnet ist.

10. Verwendung eines Wegeventils (24) und eines Rückschlagventils (30) in einer Bremsvorrichtung (10), insbesondere nach einem der Ansprüche 1 bis 9, für ein Fahrzeug, wobei die Bremsvorrichtung (10) ein Betriebsbremsventil (16) aufweist, das derart ausgebildet ist, um auf eine Betätigung eines Bedienmittels (18) hin an wenigstens einem Betriebsbremsventilausgang (20) einen betätigungsabhängigen Druck zu erzeugen, und die Bremsvorrichtung (10) mindestens einen Bremsaktuator (40) mit einem Bremsaktuatoreingang (39) aufweist, wobei der Betriebsbremsventilausgang (20) mit dem Bremsaktuatoreingang (39) mittels einer Druckverbindung (14) verbindbar ist und die Druckverbindung (14) mindestens das Wegeventil (24) und das Rückschlagventil (30) aufweist, **dadurch gekennzeichnet, dass** die Druckverbindung (14) mit dem Wegeventil (24) und dem Rückschlagventil (30) derart ausgebildet ist, um das Rückschlagventil (30) bei einer ersten Ventilstellung des Wegeventils (24) zu überbrücken, sodass ein Fluidstrom vom Bremsaktuatoreingang (39) zum Betriebsbremsventilausgang (20) gewährleistbar ist und um bei einer zweiten Ventilstellung des Wegeventils (24) einen Fluidstrom durch das Rückschlagventil (30) vom Bremsaktuatoreingang (39) zum Betriebsbremsventilausgang (20) weitestgehend zu verhindern.

## Claims

1. Brake device (10) for a vehicle, wherein the brake device (10) has a service brake valve (16) which is designed to generate, in response to an actuation of an operating means (18), an actuation-dependent pressure at at least one service brake valve outlet (20), and the brake device (10) has at least one brake actuator (40) with a brake actuator inlet (39), wherein the service brake valve outlet (20) is connectable to the brake actuator inlet (39) by way of a pressure connection (14), and the pressure connection (14) has at least a directional control valve (24) and a check valve (30), **characterized in that** the pressure connection (14) with the directional control valve (24) and the check valve (30) is designed to bypass the check valve (30) in a first valve position of the directional control valve (24), such that a fluid flow from the brake actuator inlet (39) to the service brake valve outlet (20) can be ensured, and, in a second valve position of the directional control valve (24), to substantially prevent a fluid flow through the check valve (30) from the brake actuator inlet (39) to the service brake valve outlet (20).

2. Brake device according to Claim 1,
**characterized**
**in that** the directional control valve (24) and the check valve (30) are designed to ensure a fluid flow from the service brake valve outlet (20) to the brake actuator inlet (39) regardless of the valve position of the directional control valve (24).

3. Brake device according to Claim 1 or 2,
**characterized**
**in that** the directional control valve (24) has at least one directional control valve inlet (22) and at least two directional control valve outlets (26, 28), and the check valve (30) has a check valve inlet (32) and a check valve outlet (34), wherein a first of the directional control valve outlets (26) is directly or indirectly connected to the check valve outlet (34), and a second of the directional control valve outlets (28) is directly or indirectly connected to the check valve inlet (32).

4. Brake device according to one of the preceding claims,
**characterized**
**in that** the first valve position of the directional control valve (24) corresponds to a rest position assumed by the directional control valve (24) in the deenergized and/or non-actuated state, wherein the brake device (10) is designed to switch the directional control valve (24) from a holding position into the rest position when the operating means (18) is not actuated or is released and/or when a switching means is actuated and/or when a demand for starting off is signaled.

5. Brake device according to one of the preceding claims,
**characterized**
**in that** the second valve position of the directional control valve (24) corresponds to the holding position assumed by the directional control valve (24) in the energized and/or actuated state, and the brake device (10) is designed to switch the directional control valve (24) from the rest position into the holding position when the vehicle is at a standstill and when the operating means (18) and/or a switching means are/is actuated.

6. Brake device according to one of the preceding claims,
**characterized**
**in that** the operating means (18) is a brake pedal.

7. Brake device according to one of the preceding claims,
**characterized**
**in that** the service brake valve outlet (20) is connected or connectable to the directional control valve inlet (22) directly or indirectly via the pressure connection (14).

8. Brake device according to one of the preceding claims,
**characterized**
**in that** the first directional control valve outlet (26) and the check valve outlet (34) are connected or connectable indirectly or directly to the brake actuator inlet (39) or to the brake actuator inlets (40).

9. Brake device according to one of the preceding claims,
**characterized**
**in that** the brake device (10) has a pressure sensor (44) which is arranged in the pressure connection (14) between the service brake valve outlet (20) and the directional control valve inlet (22).

10. Use of a directional control valve (24) and of a check valve (30) in a brake device (10), in particular according to one of Claims 1 to 9, for a vehicle, wherein the brake device (10) has a service brake valve (16) which is designed to generate, in response to an actuation of an operating means (18), an actuation-dependent pressure at at least one service brake valve outlet (20), and the brake device (10) has at least one brake actuator (40) with a brake actuator inlet (39), wherein the service brake valve outlet (20) is connectable to the brake actuator inlet (39) by way of a pressure connection (14), and the pressure connection (14) has at least the directional control valve (24) and the check valve (30), **characterized in that** the pressure connection (14) with the directional control valve (24) and the check valve (30) is designed to bypass the check valve (30) in a first valve position of the directional control valve (24), such that a fluid flow from the brake actuator inlet (39) to the service brake valve outlet (20) can be ensured, and, in a second valve position of the directional control valve (24), to substantially prevent a fluid flow through the check valve (30) from the brake actuator inlet (39) to the service brake valve outlet (20).

## Revendications

1. Dispositif de freinage (10) pour un véhicule, dans lequel le dispositif de freinage (10) présente une soupape de frein de service (16), qui est configurée de façon à produire à au moins une sortie de la soupape de frein de service (20), lors d'un actionnement d'un moyen de commande (18), une pression dépendant de l'actionnement, et le dispositif de freinage (10) présente au moins un actionneur de frein (40) avec une entrée d'actionneur de frein (39), dans lequel la sortie de la soupape de frein de service (20) peut être raccordée à l'entrée d'actionneur de frein (39) au moyen d'un raccordement sous pression (14) et le raccordement sous pression (14) présente au moins un distributeur (24) et un clapet de non-retour (30), **caractérisé en ce que** le raccordement sous pression (14) avec le distributeur (24) et le clapet de non-retour (30) est configuré de façon à contourner le clapet de non-retour (30) dans une première position de soupape du distributeur (24), de telle manière qu'un courant de fluide depuis l'entrée d'actionneur de frein (39) jusqu'à la sortie de la soupape de frein de service (20) puisse être garanti, et à empêcher très largement, dans une deuxième position de soupape du distributeur (24), un courant de fluide à travers le clapet de non-retour (30) depuis l'entrée d'actionneur de frein (39) jusqu'à la sortie de la soupape de frein de service (20).

2. Dispositif de freinage selon la revendication 1, **caractérisé en ce que** le distributeur (24) et le clapet de non-retour (30) sont configurés de façon à garantir un courant de fluide depuis la sortie de la soupape de frein de service (20) jusqu'à l'entrée d'actionneur de frein (39) indépendamment de la position de soupape du distributeur (24).

3. Dispositif de freinage selon la revendication 1 ou 2, **caractérisé en ce que** le distributeur (24) présente au moins une entrée de distributeur (22) et au moins deux sorties de distributeur (26, 28) et le clapet de non-retour (30) présente une entrée de clapet de non-retour (32) et une sortie de clapet de non-retour (34), dans lequel une première des sorties de distributeur (26) est raccordée directement ou indirectement à la sortie de clapet de non-retour (34) et une deuxième des sorties de distributeur (28) est raccordée directement ou indirectement à l'entrée de clapet de non-retour (32).

4. Dispositif de freinage selon l'une quelconque des revendications précédentes, **caractérisé en ce que** la première position de soupape du distributeur (24) correspond à une position de repos, que le distributeur (24) occupe dans un état non activé et/ou non commandé, dans lequel le dispositif de freinage (10) est configuré de façon à commuter le distributeur (24) d'une position de maintien à la position de repos en cas de non-actionnement ou de relâchement du moyen de commande (18) et/ou d'actionnement d'un moyen de commutation et/ou de la signalisation d'un souhait de démarrage.

5. Dispositif de freinage selon l'une quelconque des revendications précédentes, **caractérisé en ce que** la deuxième position de soupape du distributeur (24) correspond à la position de maintien, que le distributeur (24) occupe dans l'état activé et/ou commandé, et le dispositif de freinage (10) est configuré de façon à commuter le distributeur (24) à l'arrêt du véhicule de la position de repos à la position de maintien lors de l'actionnement du moyen de commande (18) et/ou d'un moyen de commutation.

6. Dispositif de freinage selon l'une quelconque des revendications précédentes, **caractérisé en ce que** le moyen de commande (18) est une pédale de frein.

7. Dispositif de freinage selon l'une quelconque des revendications précédentes, **caractérisé en ce que** la sortie de la soupape de frein de service (20) est ou peut être raccordée indirectement ou directement à l'entrée de distributeur (22) au moyen du raccordement sous pression (14).

8. Dispositif de freinage selon l'une quelconque des revendications précédentes, **caractérisé en ce que** la première sortie de distributeur (26) et la sortie de clapet de non-retour (34) sont ou peuvent être raccordées indirectement ou directement à l'entrée d'actionneur de frein (39) ou aux entrées d'actionneur de frein (40).

9. Dispositif de freinage selon l'une quelconque des revendications précédentes, **caractérisé en ce que** le dispositif de freinage (10) présente un capteur de pression (44), qui est disposé dans le raccordement sous pression (14) entre la sortie de la soupape de frein de service (20) et l'entrée de distributeur (22).

10. Utilisation d'un distributeur (24) et d'un clapet de non-retour (30) dans un dispositif de freinage (10), en particulier selon l'une quelconque des revendications 1 à 9, pour un véhicule, dans lequel le dispositif de freinage (10) présente une soupape de frein de service (16), qui est configurée de façon à produire à au moins une sortie de la soupape de frein de service (20), lors d'un actionnement d'un moyen de commande (18), une pression dépendant de l'actionnement, et le dispositif de freinage (10) présente au moins un actionneur de frein (40) avec une entrée d'actionneur de frein (39), dans lequel la sortie de la soupape de frein de service (20) peut être raccordée à l'entrée d'actionneur de frein (39) au moyen d'un raccordement sous pression (14) et le raccordement sous pression (14) présente au moins le distributeur (24) et le clapet de non-retour (30), **caractérisé en ce que** le raccordement sous pression (14) avec le distributeur (24) et le clapet de non-retour (30) est configuré de façon à contourner le clapet de non-retour (30) dans une première position de soupape du distributeur (24), de telle manière qu'un courant de fluide depuis l'entrée d'actionneur de frein (39) jusqu'à la sortie de la soupape de frein de service (20) puisse être garanti, et à empêcher très largement, dans une deuxième position de soupape du distributeur (24), un courant de fluide à travers le clapet de non-retour (30) depuis l'entrée d'actionneur de frein (39) jusqu'à la sortie de la soupape de frein de service (20).
